# EUROPEAN PATENT APPLICATION

(11) **EP 0 743 511 A1**
(43) Date of publication of application: **20.11.1996**
(21) Application number: 96201297.7
(22) Date of filing: 10.05.1996
(51) Int. Cl.: G01M 1/06, B23Q 1/70

(54) **Electric spindle for a tool balancing machine**

(30) Priority: 19.05.1995 IT MI951014
(71) Applicant: H.S.D. s.r.l., I-20036 Meda, Milano (IT)
(72) Inventor: Marelli, Flavio, 20036 Meda (Milano) (IT); Pedroli, Bruno, 25100 Brescia (IT)
(74) Representative: Mittler, Enrico

(57) **Abstract**

An electric spindle for a tool balancing machine comprises an external casing (1) and an internal spindle shaft (6) whereon a tool to be balanced is mounted, and an electric motor (4,5) for rotating the spindle shaft (6), comprising a stator (4) and a rotor (5), coaxial and internal to the stator (4). The rotor (5) is mounted directly on the spindle shaft (6), while the stator (4) is attached to the interior of said casing (1).

## Description

The present invention relates to an electric spindle for a tool balancing machine.

In current machine tools, be they for working metal, wood or glass, the tool used for machining rotates at very high speeds of the order of tens of thousands of revolutions per minute.

Since for rotation speeds higher than the typical speeds of traditional machines (3000-4000 rpm) imperfect balancing of the tool, or rather of the tool-toolholder taper assembly, may cause problems, balancing machines have been marketed which are capable of determining unbalancing of the tool-toolholder taper assembly and of indicating the size of a compensation counterweight and the position wherein this counterweight has to be added.

Substantially, known balancing machines comprise a spindle whereon the toolholder taper is mounted, in order to make it integral with the spindle itself, and an external electric motor which, by means of a typically belt transmission, rotates the spindle. Appropriately positioned sensors allow the extent of unbalancing and the point of greatest weight to be determined.

The main disadvantage of known balancing machines lies in the fact that, during the balancing operation, the tool (the tool-toolholder taper assembly) is not in the same conditions wherein it would be were it mounted on the spindle of the machine tool, in that in current machine tools no belt transmission is provided for moving the spindle.

In view of the state of the art described, the object of the present invention is that of providing an improved spindle for a balancing machine, which avoids the aforementioned problem.

In accordance with the present invention, this object is achieved thanks to an electric spindle for a tool balancing machine, comprising an external casing and an internal spindle shaft whereon a tool to be balanced is mounted, and an electric motor for rotating the spindle shaft, comprising a stator and a rotor, coaxial and internal to the stator, characterised in that said rotor is mounted directly on the spindle shaft, while said stator is attached inside said casing.

An electric spindle according to the present invention groups together in its interior the spindle shaft and the motor for rotating the spindle shaft. In this way, during balancing, the tool to be balanced, or more specifically the tool-toolholder taper assembly, is in the same conditions which it experiences during machining on a machine tool.

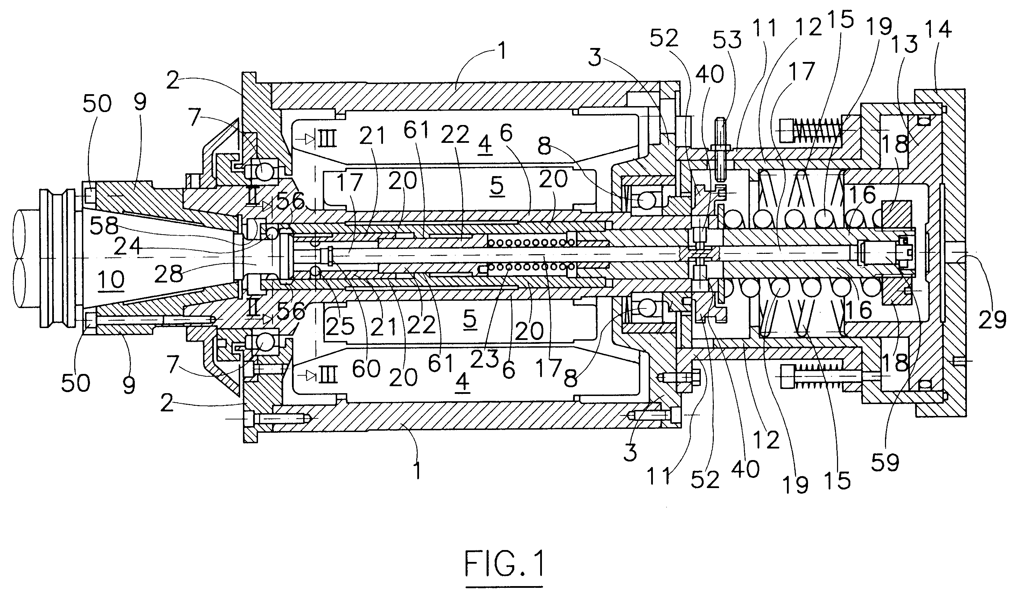

The features and advantages of the present invention will be made clearer from the following detailed description of one of its embodiments, illustrated by way of a non-limiting example in the accompanying drawing which represents an axially sectioned view of an electric spindle for a balancing machine according to the present invention.

With reference to the drawing, an electric spindle according to the invention for a machine for balancing machining tools is shown therein in axial section.

The electric spindle shown comprises a casing 1 which is substantially cylindrical and closed at its two ends by a front flange 2 and by a rear flange 3.

In accordance with the present invention, inside the casing 1 an electric motor is housed comprising a stator 4, attached to the internal wall of the casing 1, and a rotor 5 coaxial to the stator 4. The rotor 5 is keyed onto a hollow shaft 6 forming the rotating part, or spindle shaft in proper terms, whereon a toolholder taper is mounted with the tool to be balanced. The spindle shaft 6 is supported at its ends by the flanges 2 and 3, by means of two ball bearings 7 and 8.

The electric spindle shown is also provided with a clamping device for toolholder tapers of varying sizes, forming the object of a co-pending patent application in the name of the same applicant.

This clamping device comprises an adapter 9 mounted in the front by means of screws 50 to the spindle shaft 6; the adapter 9 holds a toolholder taper 10 comprising a shank 28.

In the figure the adapter 9 and the toolholder taper 10 have dimensions in agreement with the standard ISO 40. The adapter 9, being screw-mounted, is interchangeable and can be replaced by an adapter for toolholder tapers of different sizes, for example according to the standard ISO 30 (not shown).

On the threaded rear end of the spindle shaft 6 a ring nut 52 is screwed and bears reference notches for a sensor 53. The sensor 53 sends a signal to an electronic control unit (not shown) to determine an angular reference. A further sensor, not shown, provided in the electronic unit, determines the extent of the unbalancing of the tool-toolholder taper assembly to be balanced and the counterweight required for restoring balance.

Mounted at the rear flange 3 is a cylindrical sleeve 11 wherein a cylinder 12 is inserted. In the cylinder 12, closed at the rear by a sealed cover 14, an internally hollow piston 13 is slidingly housed and elastically forced towards the cover 14 by a spiral spring 15.

Inside the cylinder 12 an internally hollow tension shaft 16 is also housed, on whose threaded head a ring nut 18 is screwed. A second spiral spring 19, coaxial to the spring 15, acts on the ring nut 18, forcing the tension shaft 16 towards the head of the piston 13.

At the opposite end from the ring nut 18, the tension shaft 16 is inserted slidingly in the spindle shaft 6. This end of the tension shaft 16 inserted in the spindle shaft 6 is threaded and a first bush 20 is screwed thereon and slidingly housed in the spindle shaft 6. The first bush 20 houses, in respective holes positioned in a circumferential series at 120° one from the other, a first triad of balls 24. In the first bush 20, next to the circumferential series of balls 24, an annular groove 56 is also formed. Moreover, in the spindle 6 an annular groove 58 is formed of adequate size to hold the balls 24 at least partially.

Inside the first bush 20 a second bush 21 is slidingly housed, screwed onto a tie rod 22 elastically forced by a third spiral spring 23 in the direction of the shank 28 of the toolholder taper 10. The second bush 21 houses, in respective holes positioned in a circumferential series at 120° one from the other and in an intermediate position between the holes of the first bush 20 (that is to say, the two circumferential series of holes are rotated through 60° one in relation to the other), three balls 25 of a slightly smaller diameter than the balls 24.

In the tension shaft 16 a thrust rod 17 is slidingly inserted and extends also inside the third spiral spring 23, the tie rod 22 and the second bush 21, substantially as far as the end of the shank 28 of the toolholder taper 10. Two pins 40, integral with the spindle shaft 6, engage in respective notches formed in the surface of the thrust rod 17 to prevent the latter from rotating in relation to the spindle shaft, and at the same time prevent it from withdrawing when the toolholder taper is removed. The head of the tension shaft 16 is threaded internally, and a scrw 59 engages therein to regulate the stroke of the thrust rod 17.

In the working condition shown in the figure, the toolholder taper 10 is clamped on the spindle shaft 6. The first bush 20 is subjected to traction towards the rear part of the electric spindle by the force of the spring 19 on the tension shaft 16, and the balls 24, partially projecting from the holes 26, prevent the extraction of the widened end of the shank 28. The friction between the external conical surface of the toolholder taper 10 and the internal conical surface of the adapter 9 makes the taper-tool assembly integral with the spindle shaft 6.

For unclamping, pressurised air is fed through a hole 29 in the cover 14. This air pushes the piston 13 until it hits against the head of the tension shaft 16. The sliding towards the left of the latter causes the movement of the first bush. When the balls 24 have moved to the annular groove 58, the balls 24 can withdraw into this groove, leaving the shank 28 free.

In the case of an ISO 30 toolholder taper, the balls 25 are engaged with the shank of this taper. An annular ridge 61 on the first bush 20 hits against a similar ridge 62 on the tie rod 22, in order to transmit the force of the spring 19. During unclamping of the taper, the annular groove 56 allows the balls 25 to withdraw, in order to allow extraction of the shank.

## Claims

1. Electric spindle for a tool balancing machine, comprising an external casing (1) and an internal spindle shaft (6) whereon a tool to be balanced is mounted, and an electric motor (4,5) for rotating the spindle shaft (6), comprising a stator (4) and a rotor (5), coaxial and internal to the stator (4),
characterised in that said rotor (5) is mounted directly on the spindle shaft (6) while said stator (4) is attached inside said casing (1).
